# EUROPÄISCHE PATENTANMELDUNG

(11) **EP 1 614 855 A1**
(43) Veröffentlichungstag der Anmeldung: **11.01.2006**
(21) Anmeldenummer: 04015803.2
(22) Anmeldetag: 05.07.2004
(51) Int. Cl.: F01D 1/20, F01D 1/26, F01D 15/10, F02C 7/268, H02K 7/18

(54) **Strömungsmaschine und Verfahren zum Betreiben einer Strömungsmaschine**

(71) Anmelder: SIEMENS AKTIENGESELLSCHAFT, 80333 München (DE)
(72) Erfinder: Grossmann, Otmar, 51766 Engelskirchen (DE)

(57) **Zusammenfassung**

Die Erfindung betrifft eine Strömungsmaschine (50) mit einer Rotationsachse (4), um die zumindest ein Rotor (25) drehbar ist und mit einem von einem Arbeitsmedium durchströmbaren ringförmigen Strömungskanal (13), welcher sich in Richtung der Rotationsachse (4) erstreckt und diese konzentrisch umgreift,
mit zumindest einer zwischen dem Strömungskanal (13) und der Rotationsachse (4) angeordneten elektrischen Maschine (45), die durch eine am Rotor (25) angeordnete rotierbare Komponente (37) und eine der rotierbaren Komponente (37) gegenüberliegende drehfeste Komponente (43) gebildet ist.

Um eine Strömungsmaschine (50) anzugeben, bei welcher die elektrische Maschine (45) im brennkammernahen, hinteren Bereich der Verdichtereinheit und auch innerhalb der Turbineneinheit integrierbar ist, wird vorgeschlagen, dass der Rotor (25) um eine feststehende Achse (3) drehbar ist, auf welcher die drehfeste Komponente (43) angeordnet ist.

## Beschreibung

Die Erfindung betrifft eine Strömungsmaschine mit einer Rotationsachse, um die zumindest ein Rotor drehbar ist und welche einen von einem Arbeitsmedium durchströmbaren ringförmigen Strömungskanal aufweist, der sich in Richtung der Rotationsachse erstreckt und den Rotor konzentrisch umgreift, wobei zumindest eine zwischen dem Strömungskanal und der Rotationsachse angeordnete elektrische Maschine durch eine am Rotor angeordnete, rotierbare Komponente und eine der rotierbaren Komponente gegenüberliegende drehfeste Komponente gebildet ist. Ferner betrifft die Erfindung ein Verfahren zum Betrieb einer derartigen Strömungsmaschine.

Eine solche Strömungsmaschine ist durch die Veröffentlichung der EP 1 382 802 A1 bekannt. Die darin gezeigte Flugzeug-Gasturbine mit einem Verdichter weist einen ringförmigen Verdichterkanal für Luft auf. Am Rotor des Verdichters sind kranzförmig Laufschaufeln zum Verdichten der im Verdichterkanal strömenden Luft angeordnet. Der Verdichtkanal weist eine innere Begrenzungsfläche auf, zu der ein elektrischer Generator radial weiter innen benachbart ist. Der Generator dient als elektrischer Anlasser für die Flugzeug-Gasturbine. Eine rotierbare Komponente des Generators ist radial innerhalb des Laufschaufelkranzes am Rotor entlang dessen Umfangs durch zueinander beabstandete Magnete gebildet. Den Magneten liegt die am Gehäuse montierte Statorwicklung als drehfeste Komponente der elektrischen Maschine gegenüber.

Der im Innern des Verdichters liegende Generator ist am vorderen, eintrittseitigen Ende des Verdichters vorgesehen, in dessen Umgebung beim Betrieb vergleichsweise kühle Temperaturen auftreten.

In Richtung des Verdichteraustritts nimmt der Druck der verdichteten Luft und somit auch deren Temperatur zu. Diese heizt beim Betrieb die Umgebung des Verdichterkanals auf, so dass im hinteren Bereich des Verdichters, welcher der Brennkammer zugewandt ist, der Einsatz eines Generators nur erschwert möglich ist. Der Generator müsste entweder aufwändig gekühlt werden oder die für die Isolierung der elektrischen Leiter eingesetzten Werkstoffe müssten höheren Temperaturen widerstehen.

Somit ist ab einer axialen Position der Gasturbine, an der die Temperatur im Innern einen Grenzwert überschreitet, das Anordnen eines Generators nicht mehr oder nur eingeschränkt möglich.

Die Aufgabe der Erfindung besteht darin, eine Strömungsmaschine mit einer innenliegenden elektrischen Maschine anzugeben, bei welcher die elektrische Maschine im brennkammernahen, hinteren Bereich des Verdichters und auch innerhalb der Turbineneinheit integrierbar ist. Eine weitere Aufgabe der Erfindung ist es, ein Verfahren zum Betreiben einer derartigen Strömungsmaschine anzugeben.

Die erstgenannte Aufgabe wird durch die Merkmale des Anspruchs 1 und die zweite, auf das Verfahren gerichtete Aufgabe, wird durch die Merkmale des Anspruchs 13, 14 oder 15 gelöst. Vorteilhafte Ausgestaltungen sind in den Unteransprüchen angegeben.

Die Lösung der auf die Vorrichtung gerichteten Aufgabe sieht vor, dass der Rotor um eine feststehende Achse drehbar ist, auf welcher die drehfeste Komponente der elektrischen Maschine angeordnet ist.

Durch die Abwendung von einem integralen, durch einen Zuganker verspannten Rotor, der an seinen Enden gelagert ist, hin zu einer Konstruktion mit einer drehfesten Achse, um die zumindest ein Rotor drehbar ist, ist eine Verringerung des Abstandes der elektrischen Maschine zur Rotationsachse möglich. Dadurch wird der radiale Abstand zwischen der elektrischen Maschine und dem Strömungskanal vergrößert. Die elektrische Maschine liegt nun, verglichen mit der aus dem Stand der Technik, radial weiter innen.

Durch den vergrößerten Abstand wird beim Betrieb ein höherer Temperaturgradient im Rotor entlang seiner Radialrichtung erzeugt. Da die Umgebungstemperatur für die elektrische Maschine weiterhin gleich groß sein darf wie beim Stand der Technik, kann die Temperatur im Strömungskanal an der axialen Position der elektrischen Maschine nun höher sein als beim Stand der Technik. Das Einsatzgebiet der elektrischen Maschine innerhalb der Strömungsmaschine wird somit über den vorderen, kälteren Bereich hinaus in den hinteren Bereich signifikant erweitert.

Das vergrößerte Einsatzgebiet ermöglicht darüber hinaus den Einsatz der elektrischen Maschine in der Turbineneinheit einer Strömungsmaschine. Diese Anordnung war bisher aufgrund der besonders hohen Temperatur nicht möglich.

Ein Isolationswerkstoff mit höherer Temperaturbeständigkeit für die elektrischen Leiter der Wicklungen ist nicht erforderlich. Ebenso entfällt eine zusätzliche Kühlung der elektrischen Maschine.

Auf Grund der feststehenden Achse kann die Strömungsmaschine mehrere Rotoren aufweisen, welche eine gemeinsame Rotationsachse besitzen. Jeder Rotor ist separat betreibbar, welches zur Anpassung des Betriebes der Strömungsmaschine an die erforderliche und zu liefernde Last vorteilhaft ist.

Durch die entlang der Rotationsachse sich erstreckende, feststehende zentrale Achse kann die Ausleitung bzw. Einspeisung elektrischer Energie in die drehfeste Komponente der elektrischen Maschine problemlos erfolgen. Verschleißbehaftete und konstruktiv aufwendige Schleifkontakte sind nicht erforderlich. Die elektrischen Leiter können einfach innerhalb der Achse oder entlang der Achse montiert sein.

In einer vorteilhaften Ausgestaltung ist der Rotor radial innen auf der Achse gelagert. Hierdurch kann eine einfache und zuverlässige Lagerung des Rotors erfolgen. Beim Einsatz von mehreren Rotoren, welche alle um eine gemeinsame Drehachse drehbar sind, eignet sich diese Art der Lagerung besonders.

Bevorzugt ist die Ausgestaltung, bei der die Achse und der Strömungskanal sich vertikal, bezogen auf eine Horizontalebene, erstrecken. Hierdurch erfolgt eine platzsparende Anordnung der Strömungsmaschine. Zugleich kann der Kamin-Effekt eine Steigerung der Strömungsgeschwindigkeit im Strömungsmedium hervorrufen. Ebenso können die Einflüsse der Erdanziehungskraft auf das Strömungsmedium bezüglich zur Rotationsachse vergleichmäßigt werden (z.B. keine Gehäusekrümmung durch Temperaturschichtung aufgrund von Konvektion).

Eine besonders einfache Lagerung des Rotors kann erzielt werden, wenn für jeden rotierbaren Rotor an der Achse ein freistehender ringförmiger Balkon vorgesehen ist, welcher den jeweiligen nächstoberen Rotor zu dessen Lagerung zumindest teilweise abstützt. Somit erfolgt die Lagerung des Rotors stirnseitig, so dass das Gewicht des Rotors vom nächstunteren Balkon getragen wird. Wesentlicher Vorteil dieser Ausgestaltung ist die wesentlich vergrößerte Lagerfläche zwischen drehfestem Balkon und der Stirnseite des rotierenden Rotors, so dass dazwischen ein vergleichsweise kleines Lager eingesetzt werden kann.

Besonders vorteilhaft ist die drehfeste Komponente als zumindest eine Statorwicklung ausgebildet. Eine oder mehrere Statorwicklungen dienen zur Bildung einer Wechselstrommaschine.

Wenn eine auf dem Rotor angeordnete Rotorwicklung als rotierbare Komponente der Statorwicklung unter Bildung der elektrischen Maschine gegenüberliegt, kann vorteilhaft ein veränderbares Magnetfeld durch die Rotorwicklung erzeugt werden, welches zum Betrieb der elektrischen Maschine einsetzbar ist. Somit kann die Feldstärke des durch die Rotorwicklung erzeugten rotierenden magnetischen Feldes während des Betriebes der Strömungsmaschine an die geforderte Leistung angepasst werden.

Gemäß einer weiteren vorteilhaften Ausgestaltung bildet die Statorwicklung mit einem gegenüberliegenden, auf dem Rotor angeordneten Dauermagneten die elektrische Maschine. Hierdurch wird eine konstruktiv einfache elektrische Maschine nach Art eines Dynamos realisiert, welche kostengünstig betreibbar ist. Die verschleißbehaftete Einspeisung des Stromes über Schleifkontakte zur Erzeugung eines rotierenden Drehfeldes durch die Rotorwicklung kann entfallen.

Ein besonders vorteilhafter Vorschlag sieht vor, dass die Strömungsmaschine eine Anzahl von Rotoren und dazu eine vorzugsweise identische Anzahl von elektrischen Maschinen aufweist, indem an jedem Rotor eine rotierbare Komponente vorgesehen ist, welche jeweils einer an einem korrespondierenden Abschnitt der Achse angeordneten drehfesten Komponente gegenüberliegt. Jede Rotorscheibe ist demgemäss als frei drehbarer Rotor ausgebildet und somit unabhängig von den benachbarten Rotorscheiben drehbar, im Unterschied zum Stand der Technik, bei dem die Rotorscheiben mittels Zugankern zu einem integralen Rotor verspannt waren.

Weiter weist in einer bevorzugten Ausgestaltung jeder Rotor radial außen eine Vielzahl von in einem Kranz angeordneten Laufschaufeln auf, welche in den Strömungskanal der Strömungsmaschine hineinragen und von dem Arbeitsmedium umströmbar sind. Somit erfolgt die mechanische Kopplung der Strömungsmaschine mit der elektrischen Maschine radial, d.h. das Drehmoment wird lediglich über die Rotorscheibe übertragen und nicht durch Formschluss von benachbarten Rotorscheiben oder durch den Zuganker, wie beim Stand der Technik.

In einer vorteilhaften Ausgestaltung der Erfindung sind in Achsrichtung Laufschaufelkränze unmittelbar zueinander benachbart, welche an aufeinanderfolgenden Rotoren vorgesehen sind. Diese sind beim Betrieb der Strömungsmaschine gegenläufig rotierbar. Hierdurch entfallen die aus dem Stand der Technik bekannten Leitschaufelkränze, die bisher zwischen den benachbarten Laufschaufelkränzen zur Umlenkung - zum Verdrallen bzw. zum Entdrallen - der Strömung notwendig waren. Der axiale Bauraum wird dadurch um etwa die Hälfte verkürzt, was zu einer signifikanten Verkleinerung der Strömungsmaschine führt. Obendrein führt die Reduzierung der für den Bau der Strömungsmaschine benötigten Bauteile zu einer nicht unerheblichen Reduzierung der Herstellungskosten.

Außerdem wird der Wirkungsgrad der Strömungsmaschine erhöht. Durch die fehlenden Leitschaufeln entfallen auch die dort sonst auftretenden Strömungsverluste. Darüber hinaus treten auch keine Verluste auf, die durch den sich verändernden Querschnitt des Strömungskanals über die axiale Länge der Leitschaufeln hervorgerufen werden.

Gemäß eines besonders vorteilhaften Vorschlags weist die Strömungsmaschine für das Arbeitsmedium eine Verdichtereinheit und eine Turbineneinheit auf, in denen jeweils zumindest ein Rotor mit jeweils einer elektrischen Maschine angeordnet ist. Die in der Verdichtereinheit angeordneten elektrischen Maschinen werden als Motoren betrieben, welche das im radial weiter außenliegenden Strömungskanal strömende Strömungsmedium verdichten. Umgekehrt dazu arbeiten die elektrischen Maschinen der Turbineneinheit als Generatoren, welche über die an dieser Stelle angeordneten Rotoren mit den daran angeordneten Laufschaufeln die im Strömungsmedium enthaltene Energie über Rotationsenergie in elektrische Energie umsetzten.

Nach einer weiteren Ausgestaltung der Erfindung versorgt jede elektrische Maschine der Turbineneinheit die elektrischen Maschinen der Verdichtereinheit mit elektrischer Energie. Besonders vorteilhaft ist die elektrische Kopplung der Generatoren mit den Motoren, so dass lediglich über eine vergleichsweise kleine Distanz die elektrische Energie transportiert wird muss. Dafür sind die elektrischen Leitungen zum Ent- und Versorgen der Statorwicklungen mit Strom an diesen angeschlossen. Dies begrenzt die Leitungsverluste und verringert die Kosten.

Eine erste Lösung der auf das Verfahren gerichteten Aufgabe schlägt vor, dass die Strömungsmaschine als eine von dem Arbeitsmedium angetriebene Turbine betrieben wird, welche die als elektrischer Generator arbeitende, elektrische Maschine antreibt.

Eine zweite Lösung der auf das Verfahren gerichteten Aufgabe schlägt vor, dass die elektrische Maschine als elektrischer Motor betrieben wird, welcher die Strömungsmaschine als einen das Arbeitsmedium verdichtenden Verdichter antreibt.

Eine weitere Lösung der auf das Verfahren gerichteten Aufgabe schlägt vor, dass die Strömungsmaschine als Turbinengenerator mit einem Motorverdichter betrieben wird.

Jede Lösung der auf das Verfahren gerichteten Aufgabe liegt der erfinderische Gedanke zu Grunde, dass die Aufteilung in Strömungsmaschine und elektrische Maschine entfällt, so dass anstelle der mechanischen Kopplung mittels der Rotorwelle zur Energieübertragung von der Turbineneinheit zur Verdichtereinheit eine elektrische Kopplung eingesetzt wird. Dementsprechend sind die mechanischen Belastungen an den rotierbaren Bauteilen erheblich reduziert, was die Verwendung von Materialien mit geringeren Qualitäten bzw. Festigkeiten erlaubt.

Diese sind im Allgemeinen preiswerter und führen zu Kosteneinsparungen.

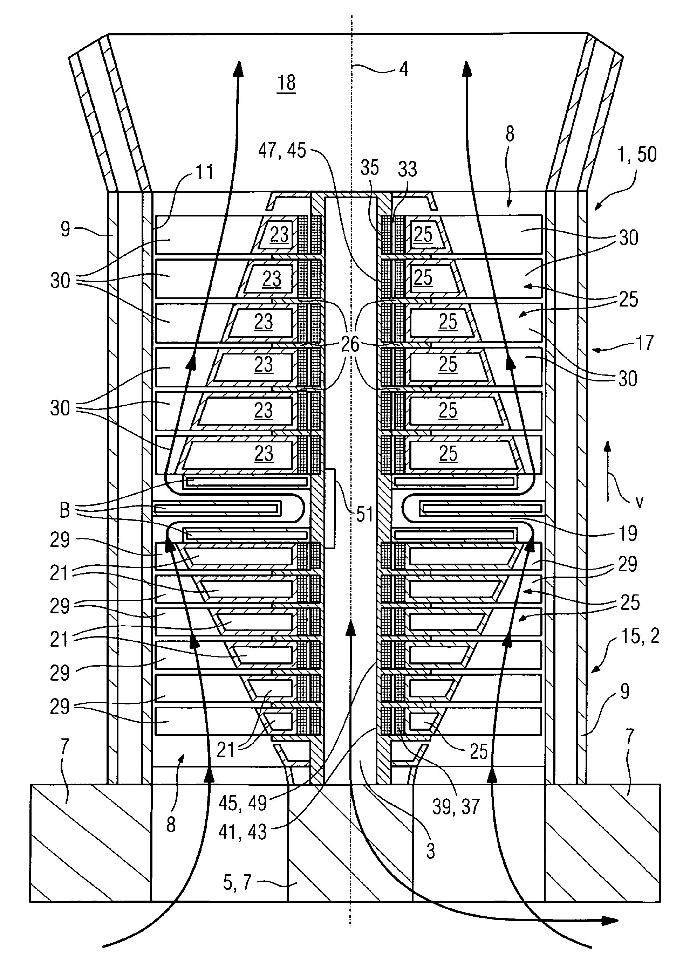

Die Erfindung wird anhand einer Zeichnung erläutert. Dabei zeigt die einzige Figur eine schematische Schnittansicht eines Turbinengenerators mit einem Motorverdichter.

Der Turbinengenerator 1 mit einem Motorverdichter 2 basiert auf der Integration einer elektrischen Maschine in eine Gasturbine.

Neu ist, dass der Turbinengenerator 1 eine zentrale, feststehende, hohle Achse 3 aufweist. Diese ist auf einem zentralen Fundamentbereich 5 des Fundamentes 7 in Vertikalrichtung V montiert. Unter der Vertikalrichtung ist die Richtung zu verstehen, die senkrecht zur Horizontebene ist. Parallel zur Achse 3 erstreckt sich sowohl die Rotationsachse 4 als auch der die Rotationsachse 4 umgreifende Strömungskanal 8.

Auf dem Fundament 7 ist das Gehäuse 9 von oben aufgesetzt, welches die Achse 3 koaxial umgreift. Das Gehäuse 9 formt eine radial äußere zylindrische Begrenzungswand 11 für den Strömungskanal 8 einer Verdichtereinheit 15 und einer Turbineneinheit 17.

Alternativ zur zylindrischen Form der äußeren Begrenzung des Strömungskanals 8 kann dessen Durchmesser über seine Längserstreckung in Richtung des Turbinenaustritts 18 abnehmen. Dadurch kann das Gehäuse 9 nach oben servicefreundlich abgenommen werden. Auf jeden Fall wird eine Teilungsfuge des Gehäuses 9 vermieden.

Die einfache axiale Montierbarkeit des druckführenden Gehäuses 9 erlaubt einen schnellen Zugriff auf die Bauteile im Inneren des Turbinengenerators 1. Hierdurch wird eine erhebliche Verkürzung der Revisions-, Inspektions- und Reparaturzeiten erreicht.

Im Innern des Gehäuses 9 ist von unten nach oben gesehen zuerst die Verdichtereinheit 15 angeordnet, der anschließend eine Brennkammer 19 und danach die Turbineneinheit 17 folgt.

Sowohl in der Verdichtereinheit 15 als auch in der Turbineneinheit 17 sind mehrere als Laufräder 21, 23 ausgebildete Rotoren 25 jeweils freidrehend an der Achse 3 radial und/oder axial gelagert.

Zur Lagerung der Laufräder 21, 23 sind diese jeweils von Balkonen 26 unterstützt. Jeder ringförmig um die Achse 3 verlaufende Balkon 26 erstreckt sich freitragend in Radialrichtung. Somit trägt und lagert jeder Balkon 26 zumindest ein Laufrad 21, 23, das z.B. jeweils radial innen bzw. axial unten sowohl pneumatisch als auch konventionell oder hydraulisch gelagert sein kann.

Am Außenumfang 27 jedes Laufrades 21, 23 sind Laufschaufeln 29, 30 angeordnet, die in den Strömungskanal 8 hineinragen und beim Betrieb von einem Strömungsmedium umströmbar sind. Die Laufschaufeln 29 der in der Verdichtereinheit 15 angeordneten Laufräder 21 dienen zum Ansaugen und Verdichten von Luft und die Laufschaufeln 30 der in der Turbineneinheit 17 angeordneten Laufräder 23 zur Umsetzung der Strömungsenergie eines in der Brennkammer 19 erzeugten Heißgases in Rotationsenergie.

Jedes Laufrad 21, 23 weist eine zentrale Bohrung 33 auf, durch welche sich die Achse 3 erstreckt. Am Innenumfang 35 der Bohrung 33 ist eine Rotorwicklung 39 als rotierbare Komponente 37 ausgebildet, welche gepaart mit einer Statorwicklung 41 eine elektrische Maschine 45 bildet. Die Statorwicklung 41 - die drehfeste Komponente 43 der elektrischen Maschine 45 - ist an dem Abschnitt der feststehenden Achse 3 fixiert, welcher der Rotorwicklung 39 gegenüberliegt.

Anstelle der Rotorwicklung 39 könnte, wie beim Stand der Technik, ein Ring aus Magneten am Rotor 25 angeordnet sein.

Auf diese Weise ist zwischen jedem Turbinenlaufrad 23 und dem gegenüberliegenden axialen Abschnitt der Achse 3 ein elektrischer Generator 47 vorgesehen, der bei der Drehung des Turbinenlaufrades 23 elektrische Leistung erzeugen und abgeben kann.

Ebenso ist zwischen jedem Verdichterlaufrad 21 und dem gegenüberliegenden axialen Abschnitt der Achse 3 ein elektrischer Motor 49 vorgesehen, der das jeweilige Verdichterlaufrad 21 zum Ansaugen und Verdichten von Luft antreiben kann.

Beim Betrieb dieser Strömungsmaschine 50 ist in der Brennkammer 19 ein Brennstoff B unter Bemischung der verdichteten Luft zu einem Heißgas verbrennbar, welches sich anschließend unter Leistungsabgabe an den Laufschaufeln 23 der Turbineneinheit 17 entspannt.

Die von den einzelnen Turbinenlaufrädern 23 aufgenommene Rotationsenergie wird von den daran angeordneten Generatoren 47 in elektrische Energie umgewandelt und über elektrische Leitungen 51 durch bzw. entlang der hohlen Achse 3 in Richtung der Verdichtereinheit 15 geführt. Am anderen Ende sind die Leitungen 51 an den Motoren 49 der Verdichtereinheit 15 angeschlossen. Die Motoren 49 treiben beim Betrieb die Verdichterlaufräder 21 an, um den zur Verbrennung eines Brennstoffs B nötigen, komprimierten Luftmassenstrom anzusaugen.

Die von den Generatoren 47 erzeugte überschüssige elektrische Energie wird in bekannter Weise einem Verteilernetzwerk zugeführt.

Da sowohl die Turbinenlaufräder 23 als auch die Verdichterlaufräder 21 abwechselnd gegensinnig rotierbar sind, kann entgegen dem Stand der Technik auf die zwischen den Laufrädern 21, 23 angeordneten, feststehenden Leitschaufeln von Strömungsmaschinen verzichtet werden.

Die Herstellungskosten für die Verdichtereinheit 15 und für die Turbineneinheit 17 verringern sich durch den Wegfall der bisher nötigen Leitschaufeln. Darüber hinaus verringert sich der Kühlluftverbrauch in der Turbineneinheit 17 durch den Wegfall der Leitschaufelkühlung, was zu einer Verbesserung des Wirkungsgrades führt. Gleichfalls vermindert sich die Gesamtbaulänge der Maschine, so dass deren Leistungsdichte ansteigt.

Durch die gegenläufige Rotation der Laufräder 21, 23 stellt sich beim Betrieb die halbe Drehzahl gegenüber der konventionellen Gasturbine aus dem Stand der Technik ein, so dass die mechanischen Belastungen aufgrund der Fliehkraft auf ein Viertel reduziert werden. Dies führt zu längeren Schaufelstandzeiten bei der Turbine und zu einer generellen Verlängerung der Lebensdauer der rotierenden Komponenten. Gleichzeitig kann ein kostengünstigerer Schaufel- und Laufradwerkstoff eingesetzt werden. Alternativ dazu könnte die Schaufelgeometrie vergrößert werden, da die geringere Drehzahl geringere Belastungen hervorruft. Dies würde zu einem größeren Massendurchsatz bzw. zu einer größeren Leistungsabgabe bei gleicher Nenndrehzahl führen.

## Patentansprüche

1. Strömungsmaschine (50)
mit einer Rotationsachse (4), um die zumindest ein Rotor (25) drehbar ist und
mit einem von einem Arbeitsmedium durchströmbaren ringförmigen Strömungskanal (13), welcher sich in Richtung der Rotationsachse (4) erstreckt und diese konzentrisch umgreift,
mit zumindest einer zwischen dem Strömungskanal (13) und der Rotationsachse (4) angeordneten elektrischen Maschine (45), die durch eine am Rotor (25) angeordnete rotierbare Komponente (37) und eine der rotierbaren Komponente (37) gegenüberliegende drehfeste Komponente (43) gebildet ist,
**dadurch gekennzeichnet,**
**dass** der Rotor (25) um eine feststehende Achse (3) drehbar ist, auf welcher die drehfeste Komponente (43) angeordnet ist.

2. Strömungsmaschine (50) nach Anspruch 1,
**dadurch gekennzeichnet,**
**dass** der Rotor (25) radial innen auf der Achse (3) gelagert ist.

3. Strömungsmaschine (50) nach Anspruch 1 oder 2,
**dadurch gekennzeichnet,**
**dass** die Achse (3) und der Strömungskanal (13) sich vertikal, bezogen auf eine Horizontebene, erstrecken.

4. Strömungsmaschine (50) nach Anspruch 3,
**dadurch gekennzeichnet,**
**dass** für jeden rotierbaren Rotor (13) an der Achse (3) ein freistehender ringförmiger Balkon () vorgesehen ist, welcher den jeweiligen nächstoberen Rotor (13) zur dessen Lagerung zumindest teilweise abstützt.

5. Strömungsmaschine (50) nach einem der Ansprüche 1 bis 4,
**dadurch gekennzeichnet,**
**dass** als drehfeste Komponente (43) zumindest eine Statorwicklung (41) angeordnet ist.

6. Strömungsmaschine (50) nach Anspruch 5,
**dadurch gekennzeichnet,**
**dass** der Statorwicklung (41) eine auf dem Rotor (25) angeordnete Rotorwicklung (39) als rotierbare Komponente (37) unter Bildung der elektrischen Maschine (45) gegenüberliegt.

7. Strömungsmaschine (50) nach Anspruch 5,
**dadurch gekennzeichnet,**
**dass** die Statorwicklung (41) mit gegenüberliegenden, auf dem Rotor (25) angeordneten Dauermagneten die elektrische Maschine (45) bildet.

8. Strömungsmaschine (50) nach Anspruch 6 oder 7,
**dadurch gekennzeichnet,**
**dass** die Strömungsmaschine (50) eine Anzahl von Rotoren (25) und dazu eine vorzugsweise identische Anzahl von elektrischen Maschinen (45) aufweist, indem an jedem Rotor (25) eine rotierbare Komponente (37) jeweils eine an der Achse (3) angeordnete drehfesten Komponente (43) gegenüberliegt.

9. Strömungsmaschine (50) nach Anspruch 6 oder 7,
**dadurch gekennzeichnet,**
**dass** jeder Rotor (25) radial außen eine Vielzahl von in einem Kranz angeordnete Laufschaufeln (21, 23) aufweist, welche in den Strömungskanal (13) der Strömungsmaschine (50) hineinragen und von dem Arbeitsmedium umströmbar sind.

10. Strömungsmaschine (50) nach einem der vorhergehenden Ansprüche **dadurch gekennzeichnet,**
**dass** in Achsrichtung mehrere Laufschaufelkränze unmittelbar zueinander benachbart sind, welche auf aufeinanderfolgenden Rotoren (25) vorgesehen sind, die beim Betrieb der Strömungsmaschine (50) gegenläufig rotierbar sind.

11. Strömungsmaschine (50) nach einem der vorhergehenden Ansprüche **dadurch gekennzeichnet,**
**dass** die Strömungsmaschine (50) für das Arbeitsmedium eine Verdichtereinheit (15) und eine Turbineneinheit (17) aufweist, in denen jeweils zumindest ein Rotor (25) mit jeweils einer elektrischen Maschine (45) angeordnet ist.

12. Strömungsmaschine (50) nach einem der vorhergehenden Ansprüche **dadurch gekennzeichnet,**
**dass** jede elektrische Maschine (45) der Turbineneinheit (17) als Energiequelle die elektrischen Maschinen (45) der Verdichtereinheit (15) als Verbraucher versorgt.

13. Verfahren zum Betrieb einer Strömungsmaschine (50) nach einem der vorhergehenden Ansprüche,
**dadurch gekennzeichnet,**
**dass** die Strömungsmaschine (50) als eine von dem Arbeitsmedium angetriebene Turbine betrieben wird, welche die als elektrischer Generator arbeitende, elektrische Maschine (45) antreibt.

14. Verfahren zum Betrieb einer Strömungsmaschine (50) nach einem der Ansprüche 1 bis 10,
**dadurch gekennzeichnet,**
**dass** die elektrische Maschine (45) als elektrischer Motor betrieben wird, welcher die Strömungsmaschine (50) als einen das Arbeitsmedium verdichtenden Verdichter antreibt.

15. Kombiniertes Verfahren nach Anspruch 12 und 13,
**dadurch gekennzeichnet,**
**dass** die Strömungsmaschine (50) als Turbinengenerator (1) mit einem Motorverdichter (2) betrieben wird.
